(19) Europäisches Patentamt
European Patent Office
Office européen des brevets

(11) **EP 1 615 213 B1**

(12) **EUROPEAN PATENT SPECIFICATION**

(45) Date of publication and mention
of the grant of the patent:
**26.11.2008 Bulletin 2008/48**

(51) Int Cl.:
***G11B 7/135*** *(2006.01)*

(21) Application number: **05254172.9**

(22) Date of filing: **02.07.2005**

(54) **Optical pickup and optical recording and/or reproducing apparatus adopting the same**

Optische Abtastvorrichtung und optisches Aufzeichnungs- und/oder Wiedergabegerät zur Verwendung derselben

Tête de lecture optique et appareil d'enregistrement et/ou de reproduction optique l'utilisant

(84) Designated Contracting States:
**DE FR GB HU NL PL**

(30) Priority: **05.07.2004 KR 2004051978**

(43) Date of publication of application:
**11.01.2006 Bulletin 2006/02**

(73) Proprietor: **Samsung Electronics Co., Ltd
Suwon-si, Gyeonggi-do (KR)**

(72) Inventors:
• **Kim, Tae-kyung
Seoul (KR)**
• **Kim, Seok-jung,
c/o 107-1502 Ssangyong Apt.
Suwon-si,
Gyeonggi-do (KR)**
• **Kim, Hee-kyung,
c/o 105-1205 Samsung Raemian Apt.
Anyang-si,
Geyonggi-do (KR)**
• **Choi, Woo-seok
Seoul (KR)**

(74) Representative: **Robinson, Ian Michael et al
Appleyard Lees
15 Clare Road
Halifax HX1 2HY (GB)**

(56) References cited:
**EP-A- 0 777 222          EP-A- 1 316 949
WO-A-03/060892**

• **POGUE R T ET AL: "ELECTRICALLY SWITCHABLE BRAGG GRATINGS FROM LIQUID CRYSTAL/POLYMER COMPOSITES" APPLIED SPECTROSCOPY, THE SOCIETY FOR APPLIED SPECTROSCOPY. BALTIMORE, US, vol. 54, no. 1, January 2000 (2000-01), pages 12A-28A, XP000903079 ISSN: 0003-7028**
• **PATENT ABSTRACTS OF JAPAN vol. 1997, no. 12, 25 December 1997 (1997-12-25) -& JP 09 223327 A (AKAI ELECTRIC CO LTD), 26 August 1997 (1997-08-26)**
• **SUTHERLAND R L ET AL: "ELECTRICALLY SWITCHABLE VOLUME GRATINGS IN POLYMER-DISPERSED LIQUIDCRYSTALS" APPLIED PHYSICS LETTERS, AMERICAN INSTITUTE OF PHYSICS. NEW YORK, US, vol. 64, no. 9, 28 February 1994 (1994-02-28), pages 1074-1076, XP000425907 ISSN: 0003-6951**

## Description

The present invention relates to an optical pickup and an optical recording and/or reproducing apparatus adopting the same, and, more particularly, to an optical pickup and an optical recording and/or reproducing apparatus adopting the same having a plurality of objective lenses.

In an optical recording and/or reproducing apparatus to record arbitrary information and/or reproduce the recorded information to and/or from an optical disk, which is an optical information storage medium, using a light spot condensed by an objective lens, a recording capacity is determined by a size of a generated light spot. The light spot size S is given by

## Equation 1

$$S \propto \lambda / NA$$

where $\lambda$ is the wavelength of light used by the apparatus and NA is the numerical aperture of the objective lens. Therefore, a light source with a short wavelength such as a blue laser and an objective lens having an NA greater than 0.6 must be adopted in order to reduce the light spot size that is focused onto the optical disk when a high density optical disk is used.

Recently, a Blu-ray disk (BD) standard has been suggested that uses a light source with a wavelength of approximately 405 nm and an objective lens with an NA of 0.85. The BD standard uses an optical disk with a capacity of approximately 25 giga bytes (GB) and a thickness (i.e., the interval between a light-incident plane and an information storage plane, corresponding to the thickness of a protection layer in this case) of 0.1mm, has been suggested. Further, a high definition DVD (HD DVD) standard has been suggested that uses a light source with a wavelength equal to that used by the BD standard, an objective lens with an NA of 0.65. The HD DVD standard uses an optical disk with a capacity of approximately 15GB and a thickness (i.e., the interval between a light-incident plane and an information storage plane, corresponding to the thickness of a substrate in this case) of 0.6mm.

In the field of digital versatile disks (DVDs), trends tend to occur in which diverse standards exist together. Occasionally, these trends are repeated. Therefore, a device to make two optical disk standards compatible with each other in one system or apparatus is needed. For example, the DVD standards use a light source with similar wavelengths, an objective lens with similar NAs, and an optical disk substrate with similar thicknesses; only a track pitch or an optical disk structure is different. Therefore, since an operation of condensing light emitted from a light source onto an optical disk is almost the same regardless of the optical disk standard, a method of performing focusing and tracking in a compatible manner depending on track pitches has been considered. However, since a thickness of an optical disk is different in the case of next-generation DVD standards, such as the BD and HD DVD standards, the generation of spherical aberration due to differences in the thicknesses of the optical disks may be severe.

There exists a method of using a holographic optical element that compensates for spherical aberration. Use of a holographic optical element that compensates for the spherical aberration in a system that uses two light sources will be described below. In the case of a DVD/compact disk (CD) compatible apparatus, since the reflection ratio of a recordable optical disk is relatively remarkably reduced with respect to light sources having a wavelength different from a wavelength prescribed for each optical disk standard, two light sources must be used. For example, since reflection ratios of a DVD-R and a CD-R to be used in one time recording are remarkably reduced when light having a wavelength that is different from a standard wavelength is used, light sources having wavelengths of 650nm and 780nm must be used. In this case, compatibility may be effectively achieved by using a diffraction angle of the holographic optical element depending on the wavelength (650nm and 780nm) and a refraction angle difference resulting from a difference between the refraction indexes according to wavelength.

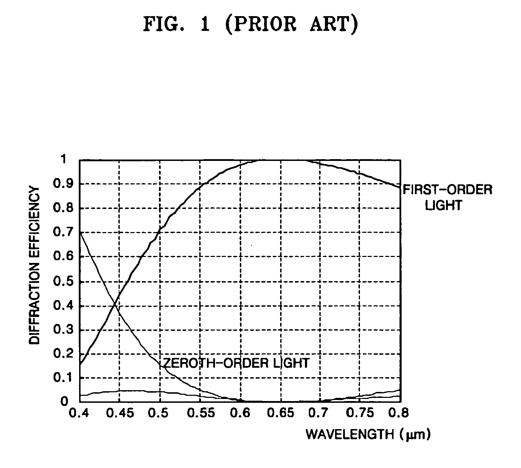

A first diffraction beam of the holographic optical element may have a high diffraction efficiency at the two wavelengths of 650nm and 780nm, as illustrated in Figure 1. In the case that the recordable optical disk is excluded, there exists a method of making CD-family optical disks that are compatible using one light source, e.g., a DVD light source. In this case, zeroth-order light and first-order light, divided by the holographic optical element, may be effectively used to compensate for spherical aberration due to a difference of thicknesses between two optical disk's substrates. However, since light that is emitted from a single source is divided into two beams of light, optical efficiency is reduced by more than half.

Since the next-generation DVD standards, i.e., the BD and HD DVD standards use light sources with substantially similar wavelengths, using the above-described method to accomplish compatibility using a diffraction angle of the holographic optical element depending on the different wavelengths that are used and a refraction angle difference resulting from a difference between the refraction indexes according to wavelength is difficult. Further, the method of compensating for the spherical aberration due to a difference in thickness of two optical disks by allowing light emitted from one light source to be diffracted into the zeroth-order and the first-order light beams using the holographic optical element has a low optical efficiency. Therefore, applying the method to a high-speed apparatus that requires greater light quantity is difficult.

EP-A-0,777,222 discloses an optical pickup including a light source, a polarized beam splitter for receiving light and for transmitting at least a portion of the light and reflecting at least a portion of the light, depending upon the polarization of the light, and first and second objective lenses. This document forms the precharacterising portion of the claims appended hereto.

According to the present invention there is provided an optical pickup as set forth in the appended claims. Preferred features of the invention will be apparent from the dependent claims, and the description which follows.

The present invention provides an optical pickup compatible with information recording media of different types, comprising: an optical unit to illuminate light onto a received information storage medium and to receive light reflected back by the information storage medium so as to detect an information signal and/or an error signal; a first objective lens to focus incident light so as to form a first light spot onto an information storage surface of the information storage medium; a second objective lens to focus incident light so as to form a second light spot onto an information storage surface of the information storage medium; the first and second objective lenses are installed within a single lens holder; and an optical path switching unit to electrically switch a proceeding direction of the light so that the light incident from the optical unit is reflected toward the first objective lens and transmitted toward the second objective lens; characterised in that: the optical pickup is compatible with a HD DVD standard and a blu-ray disk (BD) standard; the first objective lens is formed in accordance with the BD standard; the second objective lens is formed in accordance with the HD DVD standard; the optical path switching unit comprises an electrically switching Bragg grating (ESBG).

Further, the optical pickup and optical recording and/or reproducing apparatuses according to embodiments of the present invention have high optical efficiency and are able to operate at a high speed.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:

Figure 1 is a graph of the diffraction efficiency of zeroth-order light and first-order light according to wavelength in a general holographic optical element;

Figure 2 is a schematic view of an optical pickup according to an aspect of the present invention;

Figures 3A and 3B are views illustrating the structure of a liquid crystal layer of a switchable Bragg grating and selective transmitting and reflecting/diffracting in the switchable Bragg grating according to an aspect of the present invention;

Figures 4A and 4B are schematic views illustrating proceeding light paths switched by an optical path switching unit in the optical pickup illustrated in Figure 2 according to an aspect of the present invention;

Figure 5 is a schematic view of optical composition of an optical pickup according to an embodiment of the present invention;

Figure 6 is a perspective view of the optical pickup illustrated in Figure 5;

Figure 7 is a perspective view of an optical pickup according to another embodiment of the present invention;

Figure 8 is a schematic view of optical composition of an optical pickup according to another embodiment of the present invention;

Figures 9A and 9B are schematic views illustrating proceeding light paths switched by an optical path switching unit in the optical pickup illustrated in Figure 8; and

Figure 10 is a schematic view of an optical recording and/or reproducing apparatus adopting an optical pickup according to the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

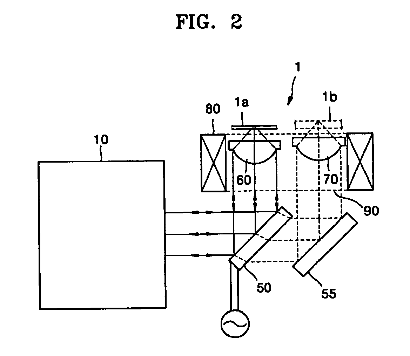

Figure 2 is a schematic view of an optical pickup according to an embodiment of the present invention. Referring to Figure 2, the optical pickup includes: an optical unit 10 to illuminate light onto an information storage medium (i.e., an optical disk 1), and to receive light reflected from the optical disk 1 so as to detect an information signal and/or an error signal; first and second objective lenses 60 and 70 to condense incident light to form a light spot onto an information storage surface of the optical disk 1; and an optical path switching unit 50 to electrically switch the path of the light that is incident from the optical unit 10 so as to allow the light to selectively progress to one of the first and the second objective lenses 60 and 70. The optical disk 1 can be a Blu-RAY (BD) disk 1a or a HIGH DEFINITION DVD (HD DVD) disk 1b. However, it is understood that the optical disk 1 can also be other types of disks compatible with the wavelength and/or the N/A substantially that of the BD or the HD DVD.

The optical unit 10 includes at least one light source, where that at least one light source includes a light source emitting light in a blue wavelength region (e.g., with a wavelength of 405 nm) appropriate for a BD 1a and an HD DVD 1b, which are next-generation DVD. Various embodiments of the optical unit 10 will be described below.

The first objective lens 60 may be formed in accordance with a BD standard and the second objective lens 70 may be formed in accordance with an HD DVD standard.

That is, the first objective lens 60 may be optimized for the optical disk 1 having a thickness of approximately 0.1 mm and for light in the blue wavelength region, and have an NA of 0.85. The second objective lens 70 may be optimized for the optical disk 1 having a thickness of approximately 0.6 mm and for light of the blue wavelength region, and have an NA of 0.65. As an alternative, the first objective lens 60 may be formed in accordance with the HD DVD standard and the second objective lens 70 may be formed in accordance with the BD standard. Further, as described below, the objective lens 60 or 70 formed in accordance with the HD DVD standard may be adaptable so as to be compatible with the DVD, or CD or the like standard. However, it will be assumed that the first and the second objective lenses 60 and 70 are appropriate for the BD and the HD DVD standards, respectively.

In this case, the optical pickup of the present invention is compatibly adapted to be usable with the BD 1a and the HD DVD 1b. While not required in all aspects, the first and the second objective lenses 60 and 70 are disposed along a radial direction of the optical disk 1 in a single lens holder 90, and are driven in a focus direction, tracking direction and/or tilt direction by an actuator 80. When the first objective lens 60 is formed appropriately for the BD standard, the first objective lens 60 is disposed farther from the center of the optical disk 1 than the second objective lens 70. As an alternative, the first objective lens 60 can be disposed closer from the center of the optical disk 1 than the second objective lens 70.

While not required in all aspects, the first and the second objective lenses 60 and 70 are installed in the single lens holder 90 considering the difference in thicknesses and the difference in working distances between the BD 1a and the HD DVD 1b. For example, when information is recorded onto or reproduced from the HD DVD 1b, which is relatively thick, the first objective lens 60 may be installed in the lens holder 90 so as to be separated from the optical disk 1 by a greater distance than an original working distance of the first objective lens 60 so that a collision between the first objective lens 60 and the HD DVD 1b may be prevented. The first and the second objective lenses 60 and 70, the single lens holder 90 mounting the objective lenses 60 and 70, and a magnetic circuit portion of the actuator 80 installed in the single lens holder 90 constitute a moving unit of an optical pickup assembly.

The optical path switching unit 50 switches between operations of transmitting and reflecting incident light using an electrical signal. For example, the optical path switching unit 50 operates as a reflection mirror in a power-off state to direct the incident light to the first objective lens 60 and to transmit the incident light in a power-on state to direct the incident light to the second objective lens 70.

When the first objective lens 60 is formed in accordance with the BD standard, the optical path switching unit 50 is operated to direct the incident light to the first objective lens 60 when information is recorded onto or reproduced from the BD 1a and to direct the incident light to the second objective lens 70 when information is recorded onto or reproduced from an optical disk of the other standards (e.g., one of the HD DVD 1b, DVD, and CD).

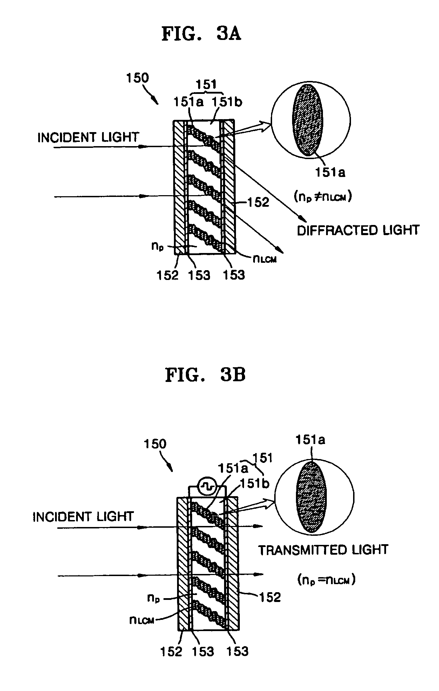

According to another aspect, the optical path switching unit 50 is an electrically switchable Bragg grating (ESBG) 150 as shown in Figures 3A and 3B. Unlike the holographic optical element, refractive index modulation is possible with the ESBG 150. The ESBG 150 includes a liquid crystal layer 151 that is interposed between transparent glass or plastic substrates 152 and selectively transmits or diffracts incident light according to an electrical signal. The ESBG 150 further includes an indium tin oxide (ITO) transparent electrode 153 coated on an inside surface of the substrate 152 to apply an electric field to the liquid crystal layer 151.

Referring to Figures 3A and 3B, the liquid crystal layer 151 includes: fine liquid crystal drops 151a entangled with chains disposed at predetermined intervals; and a polymer 151b filling the space between the fine liquid crystal drops 151a. That is, the fine liquid crystal drops 151a are densely distributed between the transparent ITO-coated substrates 152 and the polymer 151b fills between the fine liquid crystal drops 151a to form a Bragg surface.

As is described above, the ESBG 150 includes the polymer 151b which is relatively pure as well as planes of the dense fine liquid crystal drops 151a alternately distributed with constant intervals between the adjacent planes of the fine liquid crystal drops. Therefore, when the refractive index $n_{LCM}$ of the fine liquid crystal drops 151a is different from the refractive index $n_p$ of the polymer 151b, a volume phase hologram is generated so that a diffraction operation is generated. That is, the fine liquid crystal drops 151a that are disposed at constant interval act like a diffraction grating to diffract and reflect the incident light. In the liquid crystal layer 151 having the above-described structure, selective transmission and reflection of the incident light are performed using the following principle. If a voltage is not applied to the liquid crystal layer 151 (voltage-off state), since the refractive index $n_{LCM}$ of the fine liquid crystal drops 151a is different from the refractive index $n_p$ of the polymer 151b, the liquid crystal layer 151 diffracts/reflects the incident light as illustrated in Figure 3A.

Referring to Figure 3B, when a predetermined voltage is applied to the liquid crystal layer 151, since an optical axis of liquid crystal molecules constituting the liquid crystal drops 151a is aligned so that the refractive index $n_{LCM}$ of the liquid crystal molecules is substantially similar as that of the refractive index $n_p$ 151b of the polymer, the diffraction grating resulting from a difference between the refractive indexes of the liquid crystal drops 151a and the polymer 151b disappears. Thus, the liquid crystal layer 151 becomes transparent and transmits almost all of the incident light without diffraction. As is described above, the ESBG 150 is configured to transmit light when a voltage is applied thereto and to diffract light when the voltage is not applied thereto.

The optical pickup further includes a reflection mirror 55 to reflect light that has passed through the optical path switching unit 50 to the second objective lens 70.

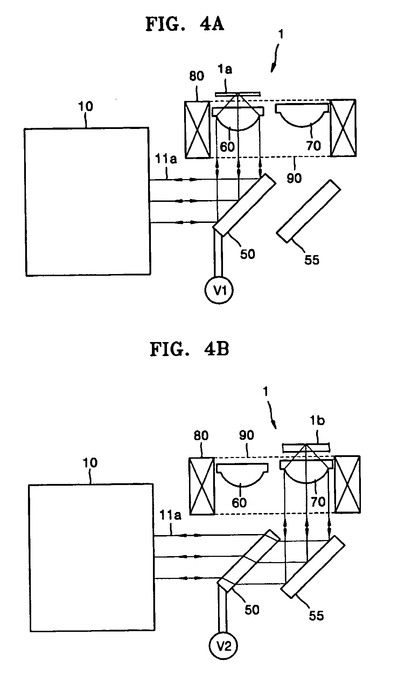

The optical pickup according to the embodiment of the present invention as described above selectively transmits or reflects incident light by electrically driving the optical path switching unit 50. For example, referring to Figure 4A, when information is recorded onto or reproduced from the BD 1a, if the optical path switching unit 50 receives a first voltage V1 (e.g., the optical patch switching unit is in a power-off or a lower power state), the optical path switching unit 50 reflects all of the light that is incident from the optical unit 10 to the first objective lens 60. Further, referring to Figure 4B, when information is recorded onto or reproduced from the HD DVD 1b, if the optical path switching unit 50 receives a second voltage V2 (e.g., the optical path switching unit is in a power-on or higher power state), the optical path switching unit 50 may transmit all of the light that is incident from the optical unit 10 to the second objective lens 70.

As is described above, in the optical pickup of an aspect of the present invention, since quantities of light directed to the BD 1a and the HD DVD 1b respectively may be maximized, high optical efficiency is achieved. Thus, high-speed recording/reproducing, which requires a large quantity of light, may be obtained. The reason a large quantity of light is required for high-speed recording/reproducing is that as the speed increases a time during which a light spot, which is illuminated to a predetermined position of the optical disk 1, decreases the light quantity illuminated per unit time must be increased to obtain the optical power required to perform recording and/or reproducing operations.

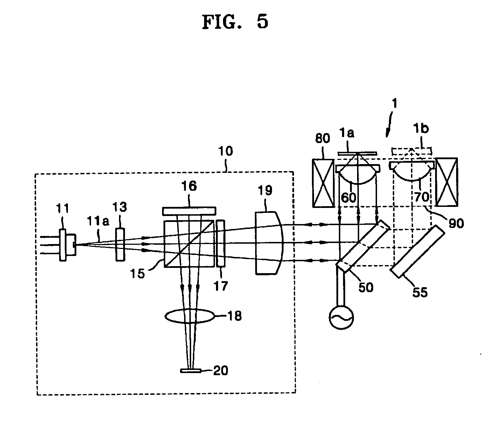

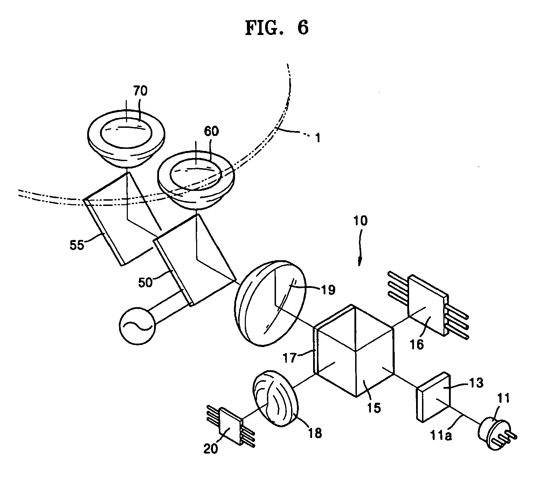

A variety of embodiments for optical construction of the optical pickup according to aspects of the present invention will be described below. Figure 5 is a schematic view of optical composition of an optical pickup according to an embodiment of the present invention and Figure 6 is a perspective view of the optical pickup illustrated in Figure 5. The same reference numerals are used for the elements substantially performing the same or similar operations as those illustrated in Figure 2 and descriptions thereof will be omitted.

Referring to Figures 5 and 6, the optical pickup according to the present embodiment includes a blue light source 11 to emit a first light 11a in a blue wavelength region (e.g., with a wavelength of 405nm in accordance with standards of next-generation DVD's, e.g., the BD 1a and the HD DVD 1b) and may be adapted to be compatible with the BD 1a and the HD DVD 1b. Further, the first objective lens 60 may be optimized for the BD 1a and the second objective lens 70 may be optimized for the HD DVD 1b. In that case, the optical path switching unit 50 is formed and operated to reflect the first light 11a incident from the optical unit 10 when the BD 1a is applied and to transmit the first light 11a incident from the optical unit 10 when the HD DVD 1b is applied.

In the optical pickup according to the embodiment of Figures 5 and 6, the optical unit 10 includes: the blue light source 11 to emit the first light 11a in the blue wavelength (i.e., with the wavelength of 405nm in accordance with the next-generation DVDs); a first optical path changing unit to change the proceeding path of the incident first light 11a; and a photo detector 20 to receive the first light 11a reflected from the optical disk 1 so as to detect an information reproducing signal and/or an error signal. Further, the optical unit 10 further includes a grating 13 to divide the first light 11a emitted from the blue light source 11 into at least three light beams. The optical unit 10 further includes a collimating lens 19 to collimate the first light 11a emitted from the blue light source 11. The optical unit 10 further includes a detection lens 18 arranged between a polarizing beam splitter 15 and the photo detector 20. However, it is understood that the optical pickup 10 can be otherwise constructed.

The illustrated first optical path changing unit includes: the polarizing beam splitter 15 transmitting or reflecting the incident first light 11a according to the light 11a's polarization state; and a quarter-wave plate 17 formed in accordance with the wavelength of the first light 11a to change the polarization of the first light 11a. The grating 13 is disposed along an optical path between the blue light source 11 and the polarizing beam splitter 15. The grating 13 is configured so that tracking error signal detection using a 3-beam method or a differential push-full method is possible. However, it is understood that the first optical path changing unit can be otherwise constructed.

While not required in all aspects, the detection lens 18 may be an astigmatism lens (e.g., a cylindrical lens), generating astigmatism in the incident first light 11a to direct a focus error signal using an astigmatism method.

In order to control the optical power of the blue light source 11, the illustrated optical unit 10 further includes a photo detector 16 for monitoring the first light by detecting the first light 11a emitted from the blue light source 11 and partially reflected by the polarizing beam splitter 15.

In the above-described optical pickup, the optical path switching unit 50 is operated to reflect the first light 11a incident from the optical unit 10 to the first objective lens 60 when the BD 1a is applied and transmit the first light 11a incident from the optical unit 10 to the reflection mirror 55 when the HD DVD 1b is applied. The light is then reflected by the reflection mirror 55 to the second objective lens 70. The first light 11a reflected by the BD 1a or the HD DVD 1b is reincident on the optical unit 10 by following reverse path. Thus, the optical pickup of the present embodiment may be compatible and applied to operate with both the BD and the HD DVD.

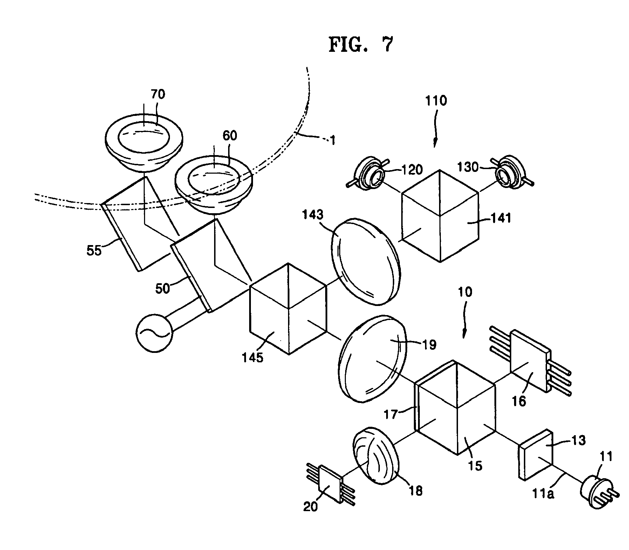

Figure 7 is a perspective view of an optical pickup according to another embodiment of the present invention. The optical pickup shown in Figure 7 has an optical construction capable of being compatible with a DVD and a CD as well as the BD 1a and the HD DVD 1b in comparison with the optical pickup embodiment of Figures 5 and 6. Here, the same reference numerals are used for the elements performing substantially the same operations as those of Figures 2 and 5 and descriptions thereof will not be repeated.

In an optical pickup according to the embodiment of Figure 7, an optical unit 110 includes: first and second optical modules 130 and 120 to emit second and third light with wavelengths appropriate for a DVD and a CD, respectively, and to receive the second and the third light after the first and second light beams are reflected from the optical disk 1 so as to detect an information reproducing signal and/or an error signal; a beam splitter 141 to separate and combine optical paths of the second and third light emitted from the first and second optical modules 130 and 120; a collimating lens 143 to collimate the second and third light emitted from the first and second optical modules 130 and 120; and a beam splitter 145 to cause the second and third light emitted from the first and second optical modules 130 and 120 to proceed to the optical path switching unit 50 by way of the same optical path as the first light 11a emitted from the blue light source 11.

The first and the second optical modules 130 and 120 are respectively a red light source to emit light in a red wavelength region (e.g., with a wavelength of 650nm in accordance with information recording and/or reproducing standards of a DVD), and an infrared light source to emit light in an infrared wavelength region (e.g., with a wavelength of 780nm in accordance with information recording and/or reproducing standards of a CD).

While not required in all aspects, a hologram optical module for a DVD and a hologram optical module for a CD may be provided for the first and the second optical modules 130 and 120, respectively. A hologram optical module includes: a light source; a photo detector; and a hologram to transmit light that is emitted from the light source, and to transmit diffracted light that is reflected from the optical disk 1 toward the photo detector. As the hologram optical module is well known in the art, a more detailed description and illustration thereof are omitted. Moreover, it is understood that elements of the module 120 or 130 can be separately provided and need not be provided in a single module.

In the illustrated embodiment of Figure 7, the second objective lens 70 is formed in accordance with information recording and/or reproducing standards of an HD DVD and to be able to be compatible with a DVD and a CD . Since the HD DVD standard is the same as or similar to the DVD standard in terms of the thickness of the optical disk and the NA of the objective lens used, compatibility between the HD DVD and the DVD may be achieved using one objective lens. Further, designing the objective lens to be compatible with a CD is similarly possible.

In the embodiment of Figure 7, the optical pickup is able to be compatible with a DVD and a CD as well as a BD and an HD DVD.

An optical pickup according to the present invention may also be formed to be compatible with a BD, an HD DVD, and a DVD. Referring to Figure 7, the optical pickup need not include one optical module of the first and the second optical modules 130 and 120 and the beam splitter 141 in Figure 7. Indeed, the second objective lens 70 may be configured in accordance with information recording and/or reproducing standards of an HD DVD and may be adapted to be compatible with one of a DVD and a CD. The optical pickup according to aspects of the present invention may be formed to include an optical system that is compatible with a DVD and/or a CD, in addition to an optical system for a BD and an HD DVD. For example, in Figure 7, the optical system may be modified such that the beam splitter 145 is excluded, an objective lens for a DVD and/or a CD is separately provided, the optical paths of the second and the third light emitted from the first and the second optical modules 130 and 120 are separated/combined by the beam splitter 141, and the second and third light is collimated by the collimating lens 143 and is incident on the objective lens for the DVD and/or the CD. In that case, the optical pickup according to the present invention includes at least three objective lenses. Since such an optical arrangement can be sufficiently inferred from the above description, detailed description thereof will be omitted.

In the above description, it has been has been assumed that the first objective lens 60 on which the light reflected by the optical path switching unit 50 is incident is appropriate for the BD 1a and the second objective lens 70 on which the light that has passed through the optical path switching unit 50 is incident is appropriate for the HD DVD 1b. However, it is possible that the first objective lens 60 is formed appropriately for the HD DVD 1b and the second objective lens 70 is formed appropriately for the BD 1a.

The operation of the optical pickup according to an aspect of the present invention as described above will now be described using the optical configuration illustrated in Figure 7 as an example. When a BD 1a is mounted in the optical recording and/or reproducing apparatus, the blue light source 11 is operated to emit the first light 11a and the optical path switching unit 50 is operated to reflect the incident first light 11a. For example, the optical path switching unit 50 is maintained in a power-off state. A linearly polarized component of the first light 11a emitted from the blue light 11 passes through the polarizing beam splitter 15 and is converted into circularly polarized light by the quarter-wave plate 17. The first light 11a is collimated by the collimating lens 19, passes through the beam splitter 145 and is incident on the optical path switching unit 50. The incident first light 11a is reflected by the optical path switching unit 50 and is focused in the form of a light spot on the information storage surface of the BD 1a by the first objective lens 60. The first light 11a, converted into different circularly polarized light by being reflected by the information storage surface of the BD 1a, follows the original optical path in the opposite direction back to the quarter-wave plate 17, gets converted into different linearly-polarized light while passing through the quarter-wave plate 17 and, having been reflected by the polarizing beam splitter 15, is then received by the optical detector 20.

On the other hand, if an HD DVD 1b is mounted in the optical recording and/or reproducing apparatus, the blue light source 11 is operated to emit the first light 11a and the optical path switching unit 50 is operated to transmit the incident first light 11a. For example, the optical path switching unit 50 is maintained in a power-on state. In this time, the optical path and polarization of the first light 11a are changed in the same manner as when the BD 1a is used. After that, the first light 11a is transmitted through the optical path switching unit 50, reflected to the second objective lens 70 by the reflection mirror 55, condensed by the second objective lens 70, and focused in the form of a light spot on the information storage surface of the HD DVD 1b. The first light 11a reflected by the information storage surface of the HD DVD 1b follows the original optical path in the opposite direction and is reflected by the polarizing beam splitter 15 and is received at the photo detector 20.

When a DVD is mounted in the optical recording and/or reproducing apparatus, the first optical module 130 is operated to emit the second light and the optical path switching unit 50 is operated to transmit the incident second light. For example, the optical path switching unit 50 is maintained in a power-on state. The second light that is emitted from the first optical module 130 passes through the beam splitter 141, is collimated by the collimating lens 143 and is incident on the beam splitter 145. The incident second light is reflected by the beam splitter 145, passes through the optical path switching unit 50, is reflected by the reflection mirror 55, and is incident on the second objective lens 70. The incident second light is condensed by the second objective lens 70 and focused in the form of a light spot on the information storage surface of the DVD. The second light reflected by the information storage surface of the DVD follows the original optical path back to the first optical module 130. When a CD is mounted in the optical recording and/or reproducing apparatus, the second optical module 120 is operated to emit the third light and the optical path switching unit 50 is operated to transmit the incident third light. For example, the optical path switching unit 50 is maintained in a power-on state. The third light emitted from the second optical module 120 is reflected by the beam splitter 141, collimated by the collimating lens 143 and incident on the beam splitter 145. The incident third light is reflected by the beam splitter 145, passes through the optical path switching unit 50, is reflected by the reflection mirror 55 and is incident on the second objective lens 70. The incident third light is condensed by the second objective lens 70 and focused in the form of a light spot on the information storage surface of the CD. The third light reflected by the information storage surface of the CD follows the original optical path back to the second optical module 120.

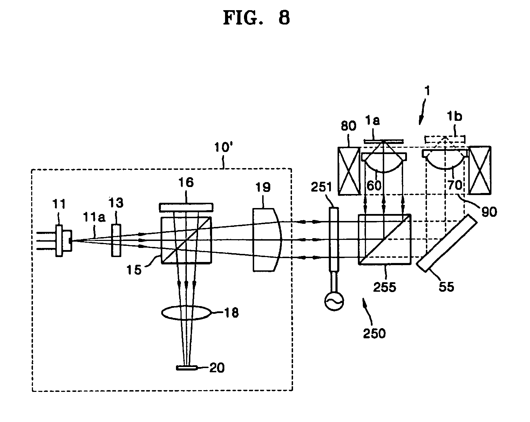

Figure 8 is a schematic view of an optical pickup according to another embodiment of the present invention. Unlike the optical pickup of Figures 5 and 6, the optical pickup illustrated in Figure 8 includes an optical path switching unit 250 different from the optical path switching unit 50 and wavelength plates 17 are arranged between the optical path switching unit 250 and the first and the second objective lenses 60 and 70, respectively, instead of being disposed in the optical unit 10'. Here, the same reference numerals are used for elements performing substantially the same functions as those of Figures 2 and 5, and description thereof will not be repeated.

Referring to Figure 8, the optical path switching unit 250 includes: a selective half-wave plate 251 to selectively change the polarization of light in a specific wavelength region to which light whose optical path is to be switched belongs by an electrical driving; and a polarizing beam splitter 255 to selectively transmit or reflect light incident from the selective half-wave plate 251 depending on the polarization of the light. As with the embodiments of Figures 5-7, when the blue light source 11 to emit the first light 11a in a blue wavelength region (i.e., with a wavelength of 405nm) appropriate for next-generation DVD (i.e., the BD 1a and the HD DVD 1b), is provided, the light of the specific wavelength region is the light of the blue wavelength region and the selective half-wave plate 251 selectively acts as a half-wave plate for the light of the blue wavelength region. The selective half-wave plate 251 may be a liquid crystal plate configured to selectively act as a half-wave plate according to which it is electrically driven.

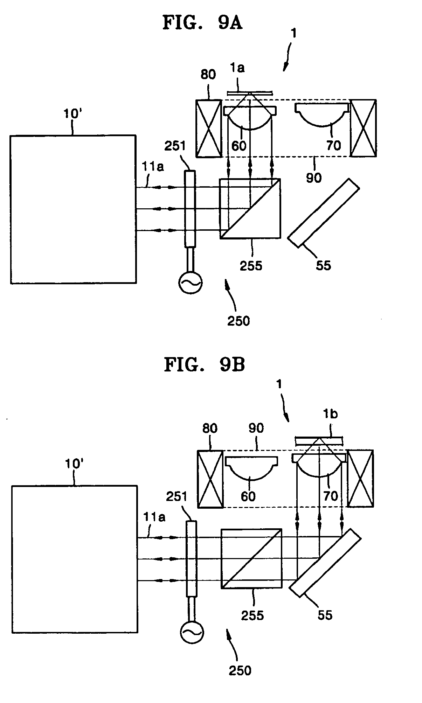

The incident light of a specific wavelength region (e.g., the incident light 11a of blue wavelength region), may be selectively sent to the first or the second objective lens 60 or 70 as illustrated in Figures 9A and 9B by the optical path switching unit 250. Referring to Figure 9A, when information is recorded and/or reproduced with respect to the BD 1a, if the selective half-wave plate 251 receives a first voltage V1 (e.g., the selective half-wave plate 25 is in a power-off or lower power state), the p-polarized component of the light of the blue wavelength region incident from the optical unit 10 passes through the selective half-wave plate 251, becomes s-polarized light and is reflected by the polarizing beam splitter 255, and directed to the first objective lens 60.

Referring to Figure 9B, when information is recorded and/or reproduced with respect to the HD DVD 1b, if the selective half-wave plate 251 receives a second voltage V2 (e.g., the selective half-wave plate 25 is in a power-on or higher power state), the p-polarized component of the light 11a of the blue wavelength region passes through the selective half-wave plate 251 without a change in polarization, passes through the polarizing beam splitter 255, and is directed to the second objective lens 70.

Since the amount of light respectively directed to the BD 1a and the HD DVD 1b may be maximized even when the optical path switching unit 250 is used, an optical efficiency is increased and thus high-speed operations requiring a large quantity of light may be obtained. Figures 8 through 9B illustrate an embodiment in which the optical path switching unit 250 is applied to the BD and HD DVD-compatible type optical pickup described with reference to Figures 5 and 6, and is intended for exemplary purpose only. The optical path switching unit 250 may be applied to the optical construction of Figure 7 in place of the optical path switching unit 50. In this case, the wave plate 17 is arranged on the optical path between the optical path switching unit 250 and the first and the second objective lenses 60 and 70 instead of being arranged in the optical unit 110.

In Figures 8 through 9B, the optical path switching unit 250 includes a cubic-type polarizing beam splitter 255. Alternately, the polarizing beam splitter 255 may be a plate-type polarizing beam splitter.

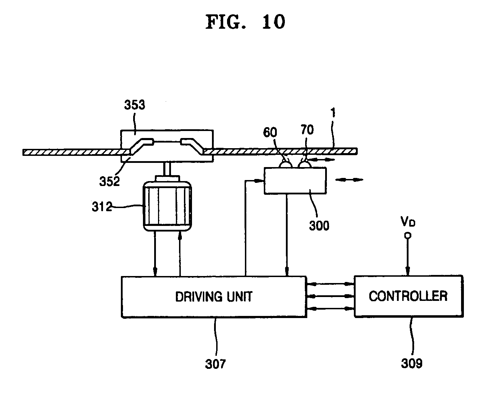

Figure 10 is a schematic view of an optical recording and/or reproducing apparatus adopting an optical pickup according to the present invention. Referring to Figure 10, the optical recording and/or reproducing apparatus includes: a spindle motor 312 to rotate an optical disk 1; an optical pickup 300 installed to move along a radial direction of the disk to reproduce information recorded on the optical disk 1 and/or record information to the optical disk; a driving unit 307 to drive the spindle motor 312 and the optical pickup 300; and a controller 309 to control focus, tracking and/or tilt servos of the optical pickup 300. The optical recording and/or reproducing apparatus further includes a turn table 352 and a clamp chucking the optical disk 353.

The optical pickup 300 has the optical structure of an optical configuration according to aspect of the present invention shown in Figures 2-9B.

Light reflected from the optical disk 1 is detected by a photo detector included in the optical pickup 300 and is then transformed into an electrical signal through photoelectric-conversion. The electrical signal is inputted to the controller 309 through the driving unit 307. The driving unit 307 controls a rotational speed of the spindle motor 312, amplifies an inputted signal, and drives the optical pickup 300. The controller 309 sends a focus servo, a tracking servo and/or a tilt servo, and a command controlled based on the signal inputted from the driving unit 307 to the driving unit 307 to perform focusing, tracking and/or tilt operations of the optical pickup 300. The optical recording and/or reproducing apparatus adopting the optical pickup 300 can adopt the BD and HD DVD standards in a compatible manner (and possibly other media such as CDs and/or DVDs) and maximize light quantities directed to the BD 1a and the HD DVD 1b, respectively, and thus realize high speed operations.

Although the above descriptions describe the case where the optical pickup according to the present invention uses the next-generation DVD standards (i.e., the BD and the HD DVD standards), in a compatible manner, the present invention is not limited to this case. That is, the optical pickup of the present invention can be applied to a variety of systems requiring a plurality of objective lenses of different design specifications besides the BD and the HD DVD systems and be properly modified as required by those systems.

According to aspects of the present invention, since the light quantities respectively directed to the plurality of objective lenses may be maximized, optical efficiency is increased and thus a high speed operation can be performed.

Further, the optical pickup may adopt the information storage media of two different standards where the wavelength of the light used is the same, and the thickness of the information storage media and the NA are different, e.g., the BD and the HD DVD standards.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

**Claims**

**1.** An optical pickup compatible with information recording media of different types, comprising:

an optical unit (10) to illuminate light onto a received information storage medium (1) and to receive light reflected back by the information storage medium (1) so as to detect an information signal and/or an error signal;

a first objective lens (60) to focus incident light so as to form a first light spot onto an information storage surface of the information storage medium (1);

a second objective lens (70) to focus incident light so as to form a second light spot onto an information storage surface of the information storage medium (1);

the first and second objective lenses (60, 70) are installed within a single lens holder (90); and

an optical path switching unit (50) to electrically switch a proceeding direction of the light so that the light incident from the optical unit (10) is reflected toward the first objective lens (60) and transmitted toward the second objective lens (70);

**characterised in that**:

the optical pickup is compatible with a HD DVD standard and a blu-ray disk (BD) standard;

the first objective lens (60) is formed in accordance with the BD standard;

the second objective lens (70) is formed in accordance with the HD DVD standard;

the optical path switching unit (50) comprises an electrically switching Bragg grating (ESBG) (150).

2. The optical pickup of claim 1, wherein the optical unit (10) comprises a blue light source (11) to emit light of a blue wavelength region.

3. The optical pickup of claim 2, wherein the optical unit (10) further comprises at least one of a red light source to emit light of a red wavelength region and an infrared light source to emit light of an infrared wavelength region, and the optical unit (10) is compatible with at least one of a DVD (digital video disk) and a CD (compact disk).

4. The optical pickup of claim 3, wherein the second objective lens (70) formed in accordance with the HD DVD standard is further compatible with at least one of a DVD and a CD.

5. The optical pickup of any of claims 1 to 4, further comprising a reflection mirror (55) to reflect light that has passed through the optical path switching unit (150).

6. The optical pickup of any of claims 1 through 5, wherein the first and second objective lenses (60,

70) are installed in the single lens holder (90) along a radial direction of the information storage medium (1).

7. The optical pickup of any preceding claim, wherein the Bragg grating (150) comprises:

a liquid crystal layer (151) that is interposed between a pair of substrates (152), the liquid crystal layer (151) comprising liquid crystal drops (151a) entangled with chains and a polymer (151b) to fill a space between the liquid crystal drops (151a), a refraction index difference between the liquid crystal drops (151a) and the polymer (151b) being adjusted by an electrical signal to selectively transmit or reflect/diffract incident light; and

transparent electrodes (153) formed on inner surfaces of the substrate (152) to produce an electric field in the liquid crystal layer (151).

8. The optical pickup (300) according to claim 1, wherein the optical unit (10) comprises at least one light source.

9. The optical pickup (300) according to claim 13, wherein the optical unit (10) includes at least one light source emitting light in a blue wavelength region.

10. The optical pickup (300) according to claim 8 or 9, wherein the first objective lens (60) is used when the optical disk is the BD and the second objective lens (70) is used when the optical disk is an HD DVD.

11. The optical pickup (300) according to claim 10, wherein the second objective lens (70) is further compatible with digital versatile disk (DVD) and/or compact disk (CD) standards.

12. The optical pickup (300) according to any of claims 8 to 11, wherein the single lens holder (90) is arranged to hold the first and the second objective lenses (60, 70) to be disposed along a radial direction of the optical disk (1), and the optical pickup comprises an actuator (80) to drive the first and second objective lenses (60, 70) in a focus direction, a tracking direction and/or a tilt direction.

13. The optical pickup (300) according to any preceding claim, wherein the first and second objective lenses (60,70) are installed in the single lens holder (90) to have corresponding working distances varying according to thicknesses of each optical disk (1).

14. The optical pickup (300) according to any preceding claim, wherein the electrically switchable Bragg grating (150) (ESBG) selectively transmits and reflects according to different input voltage levels.

15. The optical pickup (300) according to any preceding claim, wherein the ESBG (150) comprises:

    a liquid crystal layer (151) that is interposed between transparent glass or plastic substrates (512) and selectively transmits or diffracts incident light according to an electrical signal; and an indium tin oxide (ITO) transparent electrode coated on an inside surface of one of the substrates (152) to apply an electric field to the liquid crystal layer (151).

16. The optical pickup (300) according to claim 15, wherein the liquid crystal layer (151) comprises:

    fine liquid crystal drops (151a) entangled with chains disposed at predetermined intervals; and a polymer (151b) filling the space between the fine liquid crystal drops (151a).

17. The optical pickup (300) according to claim 15 or 16, wherein the ESBG (150) generates a volume phase hologram so as to provide for a diffraction operation.

18. The optical pickup (300) according to any preceding claim, wherein the ESBG (150) transmits light when a voltage is applied thereto and diffract lights when the voltage is not applied thereto.

19. The optical pickup (300) according to any of claims 8 to 18, further comprising a reflection mirror (55) to reflect light that has passed through the optical path switching unit (50, 150, 250) to the second objective lens (70).

20. The optical pickup (300) according to any of claims 8 to 19, further comprising first and second optical modules (120, 130) to emit second and third light with wavelengths appropriate for a DVD and/or a CD, respectively.

21. The optical pickup (300) according to claim 20, wherein the first and second modules (120, 130) receive the second and the third light after the first and second light beams are reflected from the optical disk (1) so as to detect an information reproducing signal and/or an error signal.

22. The optical pickup (300) according to claim 20 or 21, wherein the first and/or second module (120, 130) comprises a hologram optical module for use with a DVD and a CD.

23. A recording/reproducing apparatus, comprising:

    a spindle motor (312) to rotate an optical disk;

the optical pickup (300) of any of claims 1 to 22 installed to move along a radial direction of the disk to reproduce information recorded on the optical disk and/or record information to the optical disk;
a driving unit (307) to drive the spindle motor (312) and the optical pickup (300); and
a controller (309) to control focus, tracking and/or tilt servos of the optical pickup (300).

**Patentansprüche**

1. Optische Abtastvorrichtung, die mit Informationsaufzeichnungsmedien unterschiedlicher Art kompatibel ist, umfassend:

    eine optische Einheit (10) zum Strahlen von Licht auf einen Datenträger (1) für empfangene Informationen und zum Empfangen von von dem Informationsdatenträger (1) reflektiertem Licht, um so ein Informationssignal und/oder ein Fehlersignal zu detektieren;
    eine erste Objektivlinse (60) zum Fokussieren von einfallendem Licht, um so einen ersten Lichtfleck auf einer Informationsspeicherfläche des Informationsdatenträgers (1) zu bilden;
    eine zweite Objektivlinse (70) zum Fokussieren von einfallendem Licht, um so einen zweiten Lichtfleck auf einer Informationsspeicherfläche des Informationsdatenträgers (1) zu bilden;
    wobei die erste und zweite Objektivlinse (60, 70) in einer einzigen Linsenhalterung (90) montiert sind; und
    eine Lichtwegschalteinheit (50) zum elektrischen Schalten einer Laufrichtung des Lichts, so dass das von der optischen Einheit (10) einfallende Licht in Richtung der ersten Objektivlinse (60) reflektiert und in Richtung der zweiten Objektivlinse (70) übertragen wird;
    **dadurch gekennzeichnet, dass**
    die optische Abtastvorrichtung mit einem HD-DVD-Standard und einem Blu-Ray-Disk-Standard (BD-Standard) kompatibel ist;
    die erste Objektivlinse (60) gemäß dem BD-Standard ausgebildet ist;
    die zweite Objektivlinse (70) gemäß dem HD-DVD-Standard ausgebildet ist;
    die Lichtwegschalteinheit (50) ein elektrisch schaltendes Bragg-Gitter (ESBG) (150) umfasst.

2. Optische Abtastvorrichtung nach Anspruch 1, wobei die optische Einheit (10) eine Blaulichtquelle (11) zur Abgabe von Licht im blauen Wellenlängenbereich umfasst.

3. Optische Abtastvorrichtung nach Anspruch 2, wobei die optische Einheit (10) ferner mindestens eine Rotlichtquelle zur Abgabe von Licht im roten Wellenlängenbereich und eine Infrarotlichtquelle zur Abgabe von Licht im infraroten Wellenlängenbereich umfasst, und die optische Einheit (10) mit einer DVD (Digital Video Disk) und/oder einer CD (Compact Disk) kompatibel ist.

4. Optische Abtastvorrichtung nach Anspruch 3, wobei die zweite Objektivlinse (70), die gemäß dem HD-DVD-Standard ausgebildet ist, ferner mit einer DVD und/oder einer CD kompatibel ist.

5. Optische Abtastvorrichtung nach einem der Ansprüche 1 bis 4, ferner umfassend einen Reflexionsspiegel (55) zum Reflektieren von Licht, das durch die Lichtwegschalteinheit (150) gelaufen ist.

6. Optische Abtastvorrichtung nach einem der Ansprüche 1 bis 5, wobei die erste und zweite Objektivlinse (60, 70) in der einzigen Linsenhalterung (90) entlang einer radialen Richtung des Informationsdatenträgers (1) montiert sind.

7. Optische Abtastvorrichtung nach einem der vorhergehenden Ansprüche, wobei das Bragg-Gitter (150) Folgendes umfasst:

   eine Flüssigkristallschicht (151), die zwischen einem Paar Substraten (152) liegt, wobei die Flüssigkristallschicht (151) Flüssigkristalltropfen (151a), die mit Ketten verstrickt sind, und ein Polymer (151b) umfasst, um einen Raum zwischen den Flüssigkristalltropfen (151a) zu füllen, wobei ein Brechungsindexunterschied zwischen den Flüssigkristalltropfen (151a) und dem Polymer (151b) durch ein elektrisches Signal eingestellt wird, um einfallendes Licht selektiv zu übertragen oder reflektieren/beugen; und transparente Elektroden (153), die auf Innenflächen des Substrats (152) zur Erzeugung eines elektrischen Felds in der Flüssigkristallschicht (151) ausgebildet sind.

8. Optische Abtastvorrichtung (300) nach Anspruch 1, wobei die optische Einheit (10) mindestens eine Lichtquelle umfasst.

9. Optische Abtastvorrichtung (300) nach Anspruch 1, wobei die optische Einheit (10) mindestens eine Lichtquelle, die Licht im blauen Wellenlängenbereich abgibt, enthält.

10. Optische Abtastvorrichtung (300) nach Anspruch 8 oder 9, wobei die erste Objektivlinse (60) verwendet wird, wenn der optische Datenträger die BD ist, und die zweite Objektivlinse (70) verwendet wird, wenn der optische Datenträger eine HD-DVD ist.

11. Optische Abtastvorrichtung (300) nach Anspruch 10, wobei die zweite Objektivlinse (70) ferner mit Digital-Versatile-Disk-Standard (DVD-Standard) und/oder Compact-Disk-Standard (CD-Standard) kompatibel ist.

12. Optische Abtastvorrichtung (300) nach einem der Ansprüche 8 bis 11, wobei die einzige Linsenhalterung (90) so angeordnet ist, dass sie die erste und die zweite Objektivlinse (60, 70) hält, die entlang einer radialen Richtung des optischen Datenträgers (1) zu legen sind, und die optische Abtastvorrichtung ein Stellglied (80) zum Antreiben der ersten und zweiten Objektivlinse (60, 70) in einer Fokusrichtung, einer Spurverfolgungsrichtung und/oder einer Kipprichtung umfasst.

13. Optische Abtastvorrichtung (300) nach einem der vorhergehenden Ansprüche, wobei die erste und zweite Objektivlinse (60, 70) in der einzigen Linsenhalterung (90) mit entsprechenden, je nach Dicke des optischen Datenträgers (1) variierenden Arbeitsabständen montiert sind.

14. Optische Abtastvorrichtung (300) nach einem der vorhergehenden Ansprüche, wobei das elektrisch schaltbare Bragg-Gitter (150) (ESBG) gemäß verschiedenen Eingangsspannungspegeln selektiv überträgt und reflektiert.

15. Optische Abtastvorrichtung (300) nach einem der vorhergehenden Ansprüche, wobei das ESBG (150) Folgendes umfasst:

   eine Flüssigkristallschicht (151), die zwischen transparenten Glas- oder Kunststoffsubstraten (152) liegt und einfallendes Licht gemäß einem elektrischen Signal selektiv überträgt oder beugt; und eine transparente Indium-Zinn-Oxid-Elektrode (ITO-Elektrode), die auf einer Innenfläche eines der Substrate (152) zum Anlegen eines elektrischen Felds an die Flüssigkristallschicht (151) beschichtet ist.

16. Optische Abtastvorrichtung (300) nach Anspruch 15, wobei die Flüssigkristallschicht (151) Folgendes umfasst:

   feine Flüssigkristalltropfen (151a), die mit Ketten verstrickt sind, die mit vorbestimmten Intervallen angeordnet sind; und ein Polymer (151b), das den Raum zwischen den feinen Flüssigkristalltropfen (151a) füllt.

17. Optische Abtastvorrichtung (300) nach Anspruch 15 oder 16, wobei das ESBG (150) ein Volumenphasenhologramm erzeugt, um so einen Beugungsvorgang bereitzustellen.

**18.** Optische Abtastvorrichtung (300) nach einem der vorhergehenden Ansprüche, wobei das ESBG (150) Licht überträgt, wenn eine Spannung daran angelegt ist, und Licht beugt, wenn keine Spannung daran angelegt ist.

**19.** Optische Abtastvorrichtung (300) nach einem der Ansprüche 8 bis 18, ferner umfassend einen Reflexionsspiegel (55) zum Reflektieren von Licht, das durch die Lichtwegschalteinheit (50, 150, 250) gelaufen ist, zur zweiten Objektivlinse (70).

**20.** Optische Abtastvorrichtung (300) nach einem der Ansprüche 8 bis 19, ferner umfassend ein erstes und zweites optisches Modul (120, 130) zur Abgabe von zweitem und drittem Licht mit Wellenlängen, die sich für eine DVD bzw. CD eignen.

**21.** Optische Abtastvorrichtung (300) nach Anspruch 20, wobei das erste und zweite Modul (120, 130) das zweite und das dritte Licht empfangen, nachdem der erste und zweite Lichtstrahl vom optischen Datenträger (1) so reflektiert werden, dass ein informationsreproduzierendes Signal und/oder ein Fehlersignal detektiert wird.

**22.** Optische Abtastvorrichtung (300) nach Anspruch 20 oder 21, wobei das erste und/oder zweite Modul (120, 130) ein optisches Hologrammmodul zur Verwendung mit einer DVD und einer CD umfasst.

**23.** Aufzeichnungs-/Wiedergabegerät, umfassend:

einen Spindelmotor (312) zum Drehen eines optischen Datenträgers;
die optische Abtastvorrichtung (300) nach einem der Ansprüche 1 bis 22, die montiert ist, um sich entlang einer radialen Richtung des Datenträgers zur Wiedergabe von Informationen, die auf dem optischen Datenträger aufgezeichnet sind, und/oder zur Aufzeichnung von Informationen auf dem optischen Datenträger zu bewegen;
eine Antriebseinheit (307) zum Antreiben des Spindelmotors (312) und der optischen Abtastvorrichtung (300); und
eine Steuerung (309) zum Steuern der Fokus-, Spurverfolgungs- und/oder Kippservos der optischen Abtastvorrichtung (300).

**Revendications**

**1.** Dispositif optique de lecture compatible avec des supports d'enregistrement d'informations de différents types, comprenant :

un bloc optique (10) pour illuminer un support de stockage d'informations reçues (1) et recevoir la lumière réfléchie par le support de stockage d'informations (1) de façon à détecter un signal d'informations et/ou un signal d'erreur ;
une première lentille d'objectif (60) pour focaliser une lumière incidente de façon à former un premier point lumineux sur une surface de stockage d'informations du support de stockage d'informations (1) ;
une seconde lentille d'objectif (70) pour focaliser une lumière incidente de façon à former un second point lumineux sur une surface de stockage d'informations du support de stockage d'informations (1) ;
les première et seconde lentilles d'objectif (60, 70) sont installée à l'intérieur d'un porte-lentilles unique (90) ; et
un bloc de commutation de trajet optique (50) pour commuter électriquement un sens de passage de la lumière de telle sorte que la lumière incidente provenant du bloc optique (10) soit réfléchie vers la première lentille d'objectif (60) et transmise vers la seconde lentille d'objectif (70) ;

**caractérisé en ce que** :

le dispositif optique de lecture est compatible avec une norme HD DVD ou une norme Blu-ray disk (BD) ;
la première lentille d'objectif (60) est formée conformément à la norme BD ;
la seconde lentille d'objectif (70) est formée conformément à la norme HD DVD ;
le bloc de commutation de trajet optique (50) comprend un réseau de diffraction de Bragg à commutation électrique (ESBG) (150).

**2.** Dispositif optique de lecture selon la revendication 1, dans lequel le bloc optique (10) comprend une source de lumière bleue (11) pour émettre une lumière comprise dans une région bleue des longueurs d'onde.

**3.** Dispositif optique de lecture selon la revendication 2, dans lequel le bloc optique (10) comprend en outre au moins l'une d'une source de lumière rouge pour émettre une lumière comprise dans une région rouge des longueurs d'onde et une source de lumière infrarouge pour émettre une lumière comprise dans une région infrarouge des longueurs d'onde, et le bloc optique (10) est compatible avec au moins l'un DVD (disque vidéo numérique) et d'un CD (disque compact).

**4.** Dispositif optique de lecture selon la revendication 3, dans lequel la seconde lentille d'objectif (70) formée conformément à la norme HD DVD est en outre compatible avec au moins l'un d'un DVD et d'un CD.

5. Dispositif optique de lecture selon l'une quelconque des revendications 1 à 4, comprenant en outre un miroir réfléchissant (55) pour réfléchir la lumière qui a traversé le bloc de commutation de trajet optique (150).

6. Dispositif optique de lecture selon l'une quelconque des revendications 1 à 5, dans lequel les première et seconde lentilles d'objectif (60, 70) sont installées dans le porte-lentilles unique (90) dans un sens radial du support de stockage d'informations (1).

7. Dispositif optique de lecture selon l'une quelconque des revendications précédentes, dans lequel le réseau de diffraction de Bragg (150) comprend :

   une couche de cristaux liquides (151) qui est interposée entre une paire de substrats (152), la couche de cristaux liquides (151) comprenant des gouttes de cristaux liquides (151a) emmêlées avec des chaînes et un polymère (151b) afin de remplir un espace entre les gouttes de cristaux liquides (151a), une différence d'indice de réfraction entre les gouttes de cristaux liquides (151a) et le polymère (151b) étant ajustée par un signal électrique afin de sélectivement transmettre ou réfléchir/diffracter la lumière incidente ; et
   des électrodes transparentes (153) formées sur des surfaces internes du substrat (152) afin de produire un champ électrique dans la couche de cristaux liquides (151).

8. Dispositif optique de lecture (300) selon la revendication 1, dans lequel le bloc optique (10) comprend au moins une source de lumière.

9. Dispositif optique de lecture (300) selon la revendication 13, dans lequel le bloc optique (10) comporte au moins une source de lumière qui émet une lumière dans une région bleue des longueurs d'onde.

10. Dispositif optique de lecture (300) selon la revendication 8 ou 9, dans lequel la première lentille d'objectif (60) est utilisée quand le disque optique est le BD et la seconde lentille d'objectif (70) est utilisée quand le disque optique est un HD DVD.

11. Dispositif optique de lecture (300) selon la revendication 10, dans lequel la seconde lentille d'objectif (70) est compatible en outre avec les normes de disque polyvalent numérique (DVD) et/ou de disque compact (CD).

12. Dispositif optique de lecture (300) selon l'une quelconque des revendications 8 à 11, dans lequel le porte-lentilles unique (90) est agencé pour contenir la première et la seconde lentille d'objectif (60, 70) à disposer dans un sens radial du disque optique (1), et le dispositif optique de lecture comprend un actionneur (80) pour commander les première et seconde lentilles d'objectif (60, 70) dans un sens de focalisation, un sens d'alignement et/ou un sens d'inclinaison.

13. Dispositif optique de lecture (300) selon l'une quelconque des revendications précédentes, dans lequel les première et seconde lentilles d'objectif (60, 70) sont installés dans le porte-lentilles unique (90) de façon à avoir des distances de fonctionnement correspondantes qui varient en fonction des épaisseurs de chaque disque optique (1).

14. Dispositif optique de lecture (300) selon l'une quelconque des revendications précédentes, dans lequel le réseau de diffraction de Bragg électriquement commutable (ESBG) (150) transmet et réfléchit sélectivement en fonction des différents niveaux de tension d'entrée.

15. Dispositif optique de lecture (300) selon l'une quelconque des revendications précédentes, dans lequel l'ESBG (150) comprend :

   une couche de cristaux liquides (151) qui est interposée entre des substrats de verre ou de plastique transparents (512) et qui transmet ou diffracte sélectivement la lumière incidente conformément à un signal électrique ; et
   une électrode transparente d'oxyde d'étain dopé à l'indium (ITO) revêtue sur une surface intérieure de l'un des substrats (152) afin d'appliquer un champ électrique à la couche de cristaux liquides (151).

16. Dispositif optique de lecture (300) selon la revendication 15, dans lequel la couche de cristaux liquides (151) comprend :

   de fines gouttes de cristaux liquides (151a) emmêlées avec des chaînes disposées à des intervalles prédéterminés ; et
   un polymère (151b) qui remplit l'espace entre les fines gouttes de cristaux liquides (151a).

17. Dispositif optique de lecture (300) selon la revendication 15 ou 16, dans lequel l'ESBG (150) génère un hologramme épais de phase de façon à permettre une opération de diffraction.

18. Dispositif optique de lecture (300) selon l'une quelconque des revendications précédentes, dans lequel l'ESBG (150) transmet la lumière quand une tension lui est appliquée et diffracte la lumière quand aucune tension ne lui est appliquée.

**19.** Dispositif optique de lecture (300) selon l'une quelconque des revendications 8 à 18, comprenant en outre un miroir réfléchissant (55) afin de réfléchir la lumière qui a traversé le bloc de commutation de trajet optique (50, 150, 250) vers la seconde lentille d'objectif (70).

**20.** Dispositif optique de lecture (300) selon l'une quelconque des revendications 8 à 19, comprenant en outre des premier et second modules optiques (120, 130) afin d'émettre une deuxième et une troisième lumière aux longueurs d'onde appropriées pour un DVD et/ou un CD, respectivement.

**21.** Dispositif optique de lecture (300) selon la revendication 20, dans lequel les premier et second modules (120, 130) reçoivent la deuxième et la troisième lumière après que les premier et second faisceaux de lumière sont réfléchis par le disque optique (1) de façon à détecter un signal de reproduction d'informations et/ou un signal d'erreur.

**22.** Dispositif optique de lecture (300) selon la revendication 20 ou 21, dans lequel le premier et/ou deuxième module (120, 130) comprend un module optique d'hologramme destiné à être utilisé avec un DVD et un CD.

**23.** Appareil d'enregistrement/reproduction, comprenant :

un moteur d'axe d'entraînement (312) afin de faire tourner un disque optique ;
le dispositif optique de lecture (300) selon l'une quelconque des revendications 1 à 22 installé pour se déplacer le long d'un sens radial du disque afin de reproduire des informations enregistrées sur le disque optique et/ou enregistrer des informations sur le disque optique ;
un bloc de commande (307) afin de commander le moteur d'axe d'entraînement (312) et le dispositif optique de lecture (300) ; et
une unité de commande (309) afin de commander les servos de focalisation, d'alignement et/ou d'inclinaison du dispositif optique de lecture (300).

FIG. 1 (PRIOR ART)

# FIG. 2

# FIG. 3A

INCIDENT LIGHT

$(n_p \neq n_{LCM})$

DIFFRACTED LIGHT

# FIG. 3B

INCIDENT LIGHT

TRANSMITTED LIGHT

$(n_p = n_{LCM})$

FIG. 4A

FIG. 4B

FIG. 5

EP 1 615 213 B1

## FIG. 6

FIG. 7

FIG. 8

**FIG. 9A**

**FIG. 9B**

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0777222 A